# EUROPEAN PATENT APPLICATION

(11) **EP 1 329 785 A2**
(43) Date of publication of application: **23.07.2003**
(21) Application number: 03000794.2
(22) Date of filing: 14.01.2003
(51) Int. Cl.: G05D 16/20

(54) **Solenoid operated variable bleed pressure control valve with integral shutoff feature**

(30) Priority: 18.01.2002 US 51524
(71) Applicant: EATON CORPORATION, Cleveland, Ohio 44114-2584 (US)
(72) Inventor: Boddy, Douglas E., Troy, Michigan 48083 (US)
(74) Representative: Patentanwälte Rüger, Barthelt & Abel

(57) **Abstract**

A solenoid operated bleed type port pressure control valve having an operating rod with an annular valving surface moveable with respect to a valve seat between the control pressure signal port and the exhaust port. An inlet valve seat is formed between the inlet port and the control pressure signal port with a ball valve seated thereon to shut off the inlet. An operating rod connected to the armature extends through the inlet valve seat and opens the ball valve and thereafter the annular valving surface on the operating control bleed flow to the exhaust and consequently the pressure in the signal outlet port.

## Description

### BACKGROUND OF THE INVENTION

The present invention relates to solenoid operated valves and particularly valves of the type having a valving chamber connected to a highpressure inlet port, a pressure control signal outlet port and an exhaust or bleed port where the valve operates by controlling pressure bleed from the valving chamber to an exhaust typically connected to a pump return or sump. Pressure control valves of this type have found widespread use in control systems for hydraulically actuated devices and particularly for electronically controlled automatically shifted power transmissions for motor vehicles.

Automatic transmissions for passenger cars and light trucks utilize hydraulically controlled actuators for controlling the clutches to effect speed ratio changes in the transmission with a solenoid operated valve controlling the pressure of pilot hydraulic fluid applied to a valve, such as a spool valve for controlling flow to the clutch hydraulic actuator.

Where solenoid operated valves are used for controlling pilot flow to a spool valve for actuating a shift control clutch in an automatic power transmission, it has been found desirable to minimize the flow of pressurized fluid in the pilot circuit when shift actuator movement is not required and to thereby reduce the overall load on the transmission hydraulic fluid pump.

In such applications, where solenoid operated valves are operated to control the bleed flow from the valving chamber to an exhaust or sump, it has been difficult to provide complete shutoff of the supply pressure to the valving chamber. It has been particularly difficult to provide complete inlet shutoff for solenoid operated bleed valves where it is required to reduce the operating force of the valve. Where a solenoid operated bleed type pressure control valve is employed, it has been found quite costly and resulted in high opening force requirements to have a complete inlet shutoff valve function. This is because the shutoff valve must re-open against the full force of the inlet or supply pressure acting on the shutoff valve.

Accordingly it has long been desired to provide a way or means of completely shutting off the inlet of a solenoid operated pressure control valve of the type bleeding pressure to an exhaust or sump for maintaining control of pressure to the signal outlet port and to provide such a valve which is relatively low in manufacturing costs, easy to manufacture and assemble and reliable in prolonged service such as encountered in automatically shifting power transmissions for motor vehicles.

### BRIEF SUMMARY OF THE INVENTION

The present invention provides a solenoid operated pressure control valve having an inlet shutoff comprising a ball check valve between the high pressure inlet and the valving chamber with the valving chamber in open communication with a control pressure signal outlet port. An annular valve seat is formed between the valving chamber and exhaust port and a poppet-type valve is connected to the armature and moveable for control with respect to the valve seat for controlling bleed flow to the exhaust port for providing the control pressure to the signal outlet port. The poppet valve has a rod extending therefrom through the valve seat for effecting opening of the ball check valve. Upon initial energization of the solenoid at predetermined current levels the check valve is opened admitting fluid at supply pressure to the valving chamber; and, the bleed flow from the valving chamber to the exhaust port is thereafter controlled by energizing the solenoid for effecting movement of the poppet with respect to the valve seat. The control pressure in the signal outlet port is intended for connection to a hydraulic load circuit.

### BRIEF DESCRIPTION OF THE DRAWINGS

FIG. 1 is a cross-section of the lower portion of the solenoid in the present invention;

FIG. 2 is an enlarged view of a portion of FIG. 1 showing the check ball seat;

FIG. 3 is a perspective view of the check ball retainer valve of FIG. 1; and,

FIG. 4a is the left hand portion of a perspective view of the valve of FIG. 1 divided along dividing lines IV-IV;

FIG. 4b is the right-hand portion of a perspective view of the valve of FIG. 1 divided along dividing lines IV-IV; and,

FIG. 5 graphically presents exhaust port flow plotted as a function of coil current for the valve assembly of the present invention and for the prior art.

### DETAILED DESCRIPTION OF THE INVENTION

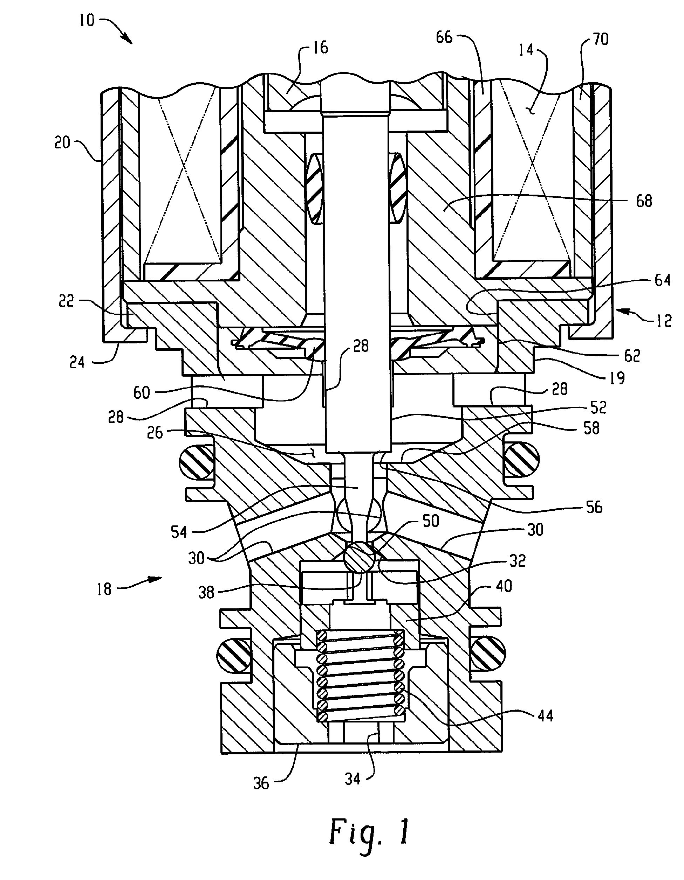

Referring to FIGS. 1, 2, 4a and 4b, the valve assembly of the present invention is indicated generally at 10 and includes a solenoid operator indicated generally at 12 having a coil 14 and an armature 16 moveably disposed therewithin with the solenoid operator 12 being mounted on a valve body subassembly indicated generally at 18. The solenoid operator may be secured to the valve body by an outer casing or cover received over a flange 22 provided on the upper end of the valve body 19 with the casing having an inwardly extending flange denoted by reference numeral 24 registered against the undersurface of body flange 22. The upper end of the casing (not shown in FIG. 1) is then retained over the operator 12 as for example by crimping or staking.

Valve body 19 has a valving chamber denoted by reference numeral 26 which has at least one and preferably a plurality of exhaust or sump return ports 28 formed therein spaced from at least one and preferably a plurality of control pressure signal outlet ports 30. An inlet pressure valve seat 32 is spaced from the control pressure ports 30. The inlet pressure valve seat communicates with a high pressure inlet passage 34 which may be formed in a retaining ring 36 threadedly engaged in the lower end of the valve body 18.

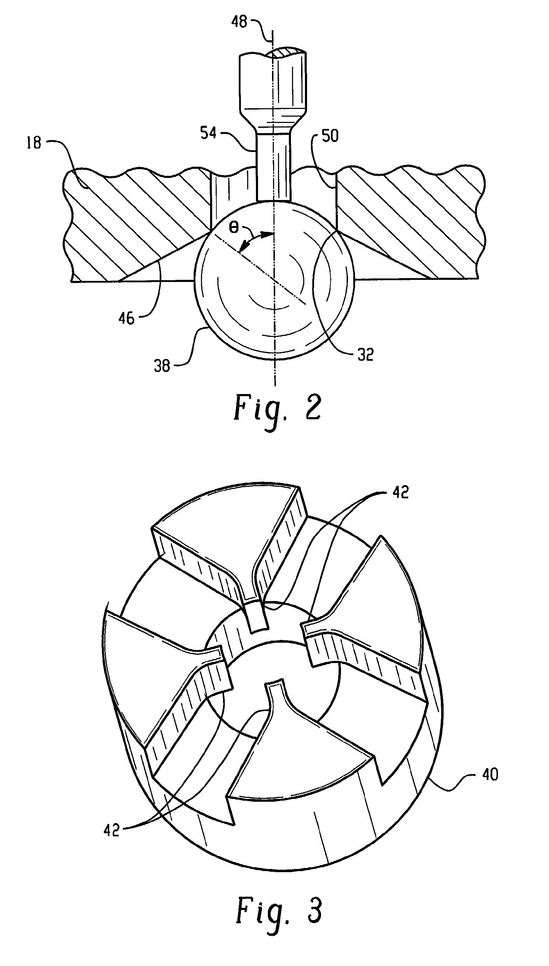

An inlet valve member in the form of a check ball 38 is disposed against the valve seat 32 and retained thereon by a fluted or grooved retaining ring 40 which is illustrated in perspective in FIG. 3. Ring 40 may have a plurality of radially inwardly extending projections 42 from the material intermittent a plurality of circumferentially spaced radially extending grooves to form a support for the check ball 38. The retainer 40 is biased against the check ball by a spring 44 with a calibrated preload provided by rotatably adjusting the threaded ring 36.

The valve seat 32 is preferably formed as a sharp edge by the conical surface 46 formed in the valve body with the intersection of the conical surface 46 and a passage 50 through valve seat for communicating inlet 34 with the valving chamber 26. The diameter of the valve seat 32 is chosen to make an angle ⊖ as shown in FIG. 2 of about 60 degrees with the center line 48 of the armature. This arrangement of a relatively sharp edge between the conically tapered surface 46 and the passage 50 through the valve provides reliable seating of the ball 38 on the seat 32 and thus ensures complete shutoff of the flow from the inlet to the control pressure signal outlet port 30.

Referring to FIGS. 1, 2 and 4a, the armature 16 has an operating rod 52 connected thereto, preferably by press fitting through the annular armature 16, for movement therewith. Rod 52 has a reduced diameter portion 54 provided on the lower end thereof which extends through the valving passage 26 and through valve seat passage 50 with the end thereof making contact with ball 38.

The operating rod has provided thereon an annular valving surface 56 on the shoulder formed by the transition to the smaller diameter 54; and, the valving surface 56 is positioned for movement with respect to an annular valve seat 58 formed in the valving chamber 26 between the pressure control signal outlet port 30 and the exhaust port 28.

Valve body 19 has a seal preferably in the form of a flexible diaphragm 60 provided therein which provides a moveable seal about the operating rod 52 for sealing the upper end of the valving chamber 26. The diaphragm may be preassembled onto a washer 62 and the washer press fitted into a counterbore 64 formed in the body.

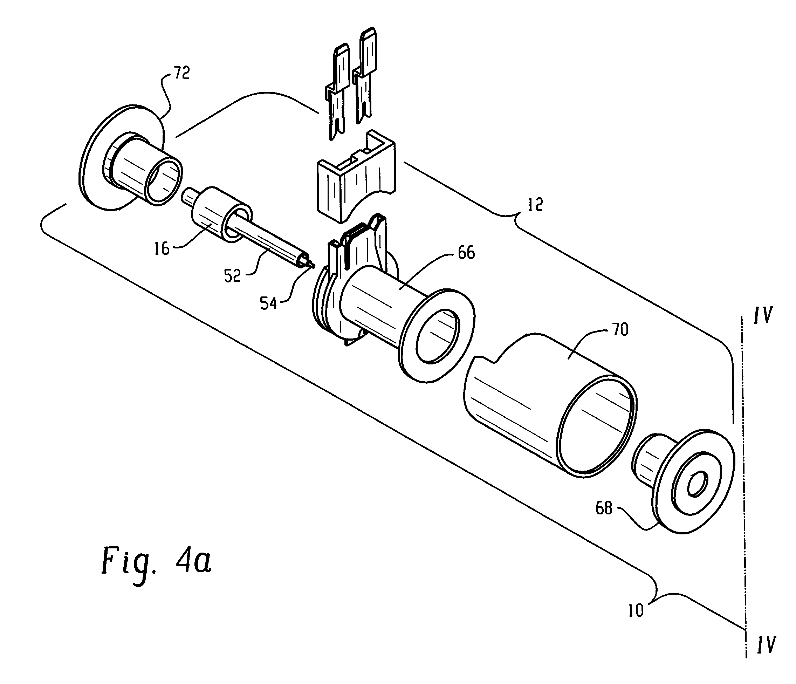

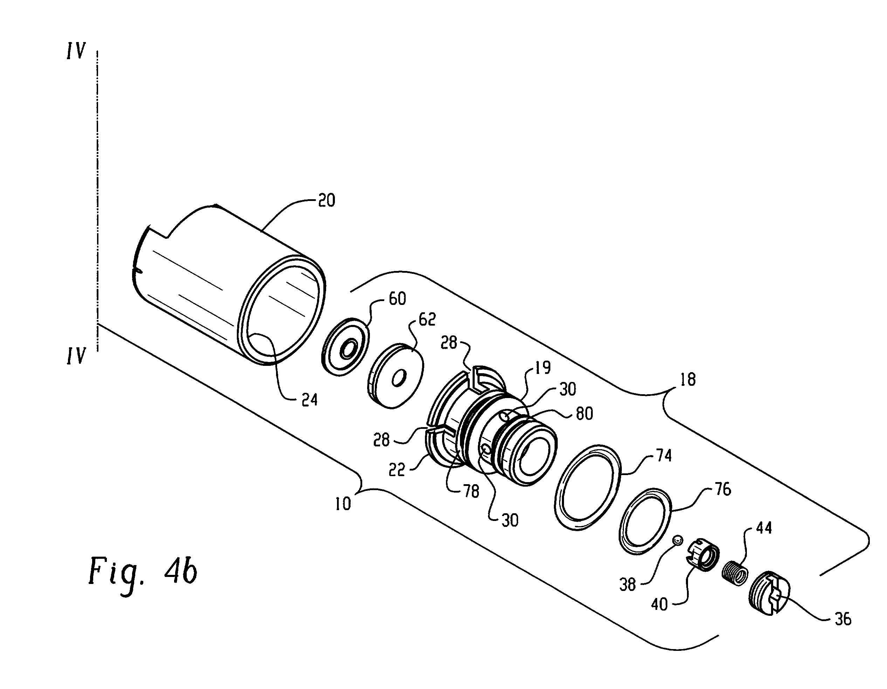

Coil 14 is wound on a bobbin 66 and is supported by an annular lower flux collector 68. An outer sleeve 70 is received over the coil for spacing the lower flux collector 68 and an upper flux collector 72 (see FIG. 4a).

In the presently preferred practice of the invention, the body is put together as a subassembly indicated by reference numeral 18 in FIG. 4b; and, the solenoid actuator is put together as a subassembly indicated by reference numeral 12 in FIG. 4a. The two subassemblies 12, 18 are then assembled together and the outer casing 20 is assembled thereover with the upper end thereof retained thereover by any suitable expedient, such as by crimping or staking, to retain the complete assembly 10. O-ring seals 74, 76 may be provided in annular grooves 78, 80 formed on axially opposite sides of the control pressure signal ports 30.

In operation, the spring 44 biases the ball retainer 40 against the under side of check ball 38 maintaining the check ball against valve seat 32 with the coil in the de-energized state. Upon energization of the coil 14, armature 16 moves operating rod 52 to cause the lower end thereof to press against ball 38 to overcome the force of spring 44 at a desired current level and move ball 38 away from seat 32, whereupon flow is permitted through passage 34 and through passage 50 to the valving chamber 26 providing a pressure control signal through outlet ports 30.

Thereafter, upon further coil energization, the pressure in the valving chamber and outlet ports 30 is controlled by the valving surface 56 moving with respect to the valve seat 58 to control bleed flow through the exhaust ports 28. It will be understood that the movement of the valving surface 56 is controlled by applying a desired current to the coil 14. If full current is applied through coil 14, the valving surface 56 closes against valve seat 50 preventing flow to the exhaust ports 28 and thereby applying full inlet pressure to the pressure signal control ports 30.

The present invention thus provides a solenoid operated valve for providing a fluid pressure control signal proportional to the electric current applied to the solenoid in which a ball check valve provides complete inlet shutoff when the valve is de-energized to prevent unwanted bleed flow in the system and eliminating the pump energy which results from such bleed flow.

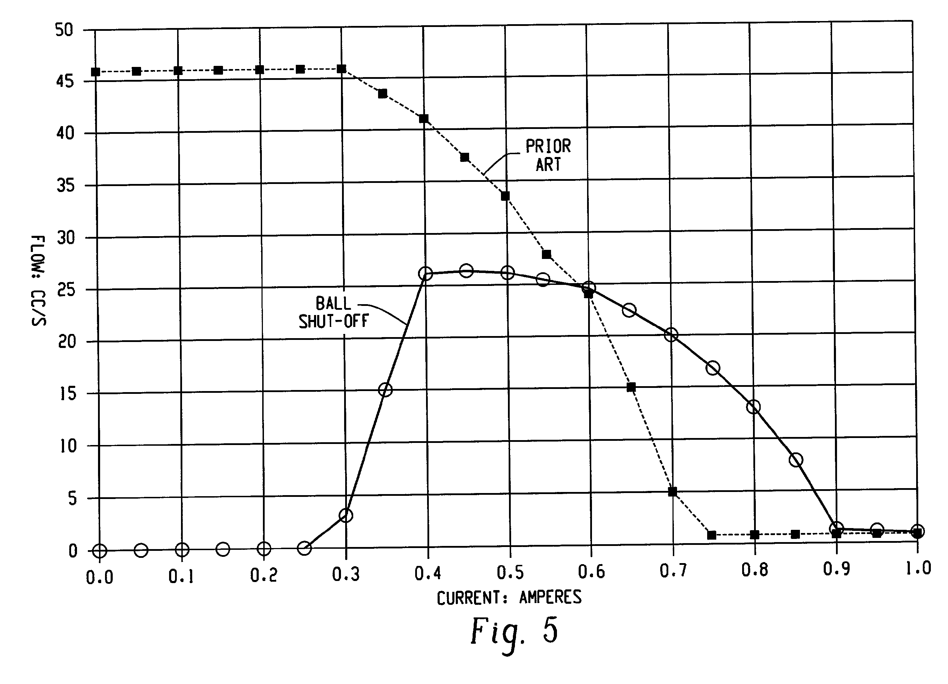

Referring to FIG. 5, the flow from the supply inlet port to the exhaust port with the control signal port blocked in cubic centimeters per second (CC/S) is plotted as a function of coil current in amperes separately for both the valve assembly of the present invention and a prior art valve without the inlet shutoff ball valve. It will be seen from the graphs of FIG. 5 that unlike a valve without the ball shutoff, the valve assembly of the present invention does not permit flow until a desired amount of coil energization of about 0.3 amperes is provided.

Although the invention has hereinabove been described with respect to the illustrated embodiments, it will be understood that the invention is capable of modification and variation and is limited only by the following claims.

## Claims

1. A solenoid operated variable bleed pressure control valve with integral shut-off comprising:
(a) a valve body having an inlet port, a control pressure signal outlet port and an exhaust port and a valving chamber in open communication with said control pressure signal outlet port;
(b) a solenoid operator associated with said body and having a moveable armature with an operating member connected thereto and extending into said valving chamber;
(c) a first stationary annular valving surface disposed between said pressure control port and said exhaust port and a corresponding second annular valving surface on said operating member, said second annular valving surface operative upon movement of the operating member to cooperate with said first annular stationary valving surface for controlling bleed flow from said valving chamber to said exhaust port;
(d) a third stationary annular valving surface disposed between said control pressure signal outlet port and said inlet port and a shut-off valve member having a fourth annular valving surface disposed for movement therewith, wherein said operating member extends through said third stationary annular valving surface and effects closing of said fourth valving surface thereon when said armature and operating member are moved to a position for effecting maximum bleed flow to said exhaust port.

2. The valve defined in claim 1, wherein said third stationary valving surface has a conically tapered configuration with a sharp peripheral edge.

3. The valve defined in claim 1, wherein said second stationary valving surface is formed by coining with said at least a portion of said third valving surface.

4. The valve defined in claim 1, wherein said shut-off valve member is spring biased into contact with said operating member.

5. The valve defined in claim 1 wherein said second annular stationary valving surface has a sharp edge configuration.

6. A method of providing automatic inlet shut-off in a solenoid operated variable bleed pressure control valve comprising:
(a) providing a valve body having an inlet port, a control pressure signal outlet port and exhaust port and a valving chamber in open communication with the pressure control signal port;
(b) disposing a solenoid coil with said body and disposing a moveable armature within the coil;
(c) disposing an operating member with the armature for movement thereby and extending the operating member into the valving chamber and forming a first annular valving surface on said operating member;
(d) disposing a second stationary annular valving surface in said valving chamber and moving the operating member with respect to the second stationary annular valving surface and controlling flow between the valving chamber and the exhaust port; and,
(e) disposing a third stationary annular valving surface between the inlet port and the valving chamber and disposing a corresponding moveable valve member adjacent to the third stationary annular valving surface; and,
(f) de-energizing said solenoid coil and moving said first annular valving surface to a position maximizing flow to said exhaust port and closing said moveable valve member on said third stationary annular valving surface and preventing flow from the inlet port to the valving chamber.

7. The method defined in claim 6, wherein said step of disposing a corresponding moveable valve member includes disposing a spherical member.

8. The method defined in claim 6, wherein said step of disposing a second stationary valving surface includes coining.

9. The method defined in claim 8, wherein said step of coining includes coining with a spherical member.

10. The method defined in claim 6, wherein said step of disposing a second stationary annular valving surface includes forming a sharp annular edge.
